Europäisches Patentamt

(19) European Patent Office

Office européen des brevets

(11) Numéro de publication: **0 064 442**
**A1**

# (12) DEMANDE DE BREVET EUROPEEN

(21) Numéro de dépôt: **82400710.8**

(22) Date de dépôt: **20.04.82**

(51) Int. Cl.³: **B 60 M 1/18**

(30) Priorité: **27.04.81 FR 8108305**

(43) Date de publication de la demande:
**10.11.82 Bulletin 82/45**

(84) Etats contractants désignés:
**DE GB IT**

(71) Demandeur: **JACQUES GALLAND S.A., Société dite:**
**20 rue de l'Insurrection Parisienne**
**F-94600 Choisy-le-Roi(FR)**

(72) Inventeur: **Dourneau, Robert**
**57 Voie de Villejuif**
**F-94320 Thiais(FR)**

(74) Mandataire: **Moncheny, Michel et al,**
**c/o Cabinet Lavoix 2 Place d'Estienne d'Orves**
**F-75441 Paris Cedex 09(FR)**

(54) Isolateur de sections pour ligne aérienne de traction électrique de chemin de fer, et procédé et appareil pour sa mise en place.

(57) Cet isolateur de type à patins (16, 17) symétriques et décalés comporte des frotteurs (18) de part et d'autre de son axe, pour assurer la continuité du soutien sur le pantographe. Il comporte des moyens d'accrochage coopérant avec des moyens complémentaires portés par des griffes (23) ancrées sur le conducteur (22). Pour poser l'isolateur on fixe deux paires de griffes (23) sur le conducteur (22), on les maintient mécaniquement en position l'une par rapport à l'autre, on coupe le conducteur entre les paires de griffes, on présente l'isolateur avec ses moyens d'accrochage derrière ceux des paires de griffes et on libère celles-ci progressivement.

FIG. 2

Croydon Printing Company Ltd.

"ISOLATEUR DE SECTIONS POUR LIGNE AERIENNE DE TRACTION
ELECTRIQUE DE CHEMIN DE FER, ET PROCEDE ET APPAREIL
POUR SA MISE EN PLACE".

La présente invention est relative aux isolateurs de sections utilisés sur les lignes aériennes de traction électrique de chemins de fer.

On connaît actuellement de nombreux types d'isolateurs de sections pour les lignes aériennes de traction électrique pour toutes les plages de tensions utilisées.

En ce qui concerne la traction à 25 Kv les isolateurs de sections utilisés présentent tous des inconvénients plus ou moins importants : leur poids excessif leur confère le plus souvent une inertie importante qui est nuisible au passage du pantographe d'une motrice, ce qui limite la vitesse de celle-ci; ils sont souvent difficiles à poser et à régler avec précision; ils présentent le plus souvent un sens de circulation préférentiel, ce qui constitue une limitation pour leur utilisation en des emplacements particuliers.

Avec l'extension croissante des lignes à grande vitesse ces inconvénients prennent une importance accrue. En effet, la pression exercée par un pantographe d'une motrice sur la ligne aérienne est d'environ 15 kg. Dans ces conditions, le franchissement à grande vitesse d'un isolateur de section applique à cet isolateur des forces extrêmement importantes. Lorsque l'isolateur comporte des patins symétriques et décalés pour la continuité électrique comme décrit au brevet suisse N° 594518, le pantographe ne porte à un moment que sur un seul de ces patins et l'appareil bascule, ce qui provoque un choc lorsque le pantographe attaque le second patin, entraîne un risque d'accident et est par suite incompatible avec les grandes vitesses recherchées actuellement.

On connaît des isolateurs de sections qui présentent une bonne résistance dans un plan longitudinal vertical pour des lignes à vitesse moyenne, par exemple comme décrit au brevet français N° 835.867, dans lequel les extrémités de l'isolateur sont reliées au moyen de deux barres isolantes parallèles dans un plan vertical, mais cet isolateur n'est pas adapté pour résister aux contraintes engendrées par le passage du pantographe sur les lignes modernes à grande vitesse.

On connaît également un isolateur de section, décrit dans le brevet US N° 4.187.934, comportant des frotteurs disposés entre

0064442

- 2 -

les patins le long de l'élément isolant, de chaque côté de celui-ci, pour soutenir l'isolateur sur le pantographe, au passage, dans l'intervalle entre des patins identiques.

Il convient enfin de signaler que la mise en place d'un isolateur de sections de type classique est une opération longue et délicate qui pose de nombreux problèmes techniques.

L'invention a en conséquence pour but de fournir un isolateur de sections pour ligne aérienne de traction électrique de chemin de fer qui remédie à ces inconvénients, un procédé pour la pose de cet isolateur et un dispositif pour la mise en oeuvre de ce procédé.

L'invention a en conséquence pour objet un isolateur de sections pour ligne aérienne de traction électrique de chemin de fer, du type comportant deux montures métalliques en alliage léger reliées respectivement aux conducteurs de contact de deux sections voisines et reliées mécaniquement entre elles par des barres en matériau isolant disposées parallèles dans un plan vertical et dont les extrémités sont encastrées dans des logements prévus dans les parties en regard desdites montures, des patins symétriques et décalés pour assurer la continuité électrique, et deux frotteurs isolants symétriques, caractérisé en ce que lesdits frotteurs sont décalés longitudinalement et disposés en regard des intervalles entre les patins respectivement, l'agencement étant tel qu'un appui continu soit assuré au pantographe en des points espacés de part et d'autre de l'axe du conducteur sur la totalité de son trajet le long de l'isolateur.

Suivant une autre caractéristique de l'invention, le rapport entre l'écartement et la longueur des deux barres en matière isolante disposées parallèlement dans un plan vertical contenant le conducteur et qui constituent l'isolateur proprement dit est compris entre 1/3,5 et 1/4,2.

L'invention a également pour objet un procédé pour poser un isolateur de sections sur une ligne aérienne de traction électrique de chemin de fer, cet isolateur étant du type comportant à chaque extrémité des moyens de liaison adaptés pour coopérer avec des moyens de liaison complémentaires solidaires de griffes de fixation ancrées sur le conducteur d'alimentation, caractérisé en ce qu'on pose tout d'abord lesdites griffes

3

sur le conducteur avec leurs moyens de liaison espacés l'un de l'autre d'une distance légèrement inférieure à la distance séparant les moyens de liaison de l'isolateur, on maintient mécaniquement lesdites griffes l'une par rapport à l'autre de façon à les empêcher de s'écarter, on sectionne ledit conducteur au niveau des extrémités en regard desdites griffes, on présente l'isolateur de façon que les moyens de liaison desdites griffes soient disposés entre les moyens de liaison des extrémités de l'isolateur et en regard de ceux-ci, et on libère lesdites griffes en les laissant s'écarter l'une de l'autre progressivement pour amener les moyens de liaison des griffes en prise avec ceux des extrémités de l'isolateur.

L'invention a enfin pour objet un appareil pour la mise en oeuvre du procédé tel que défini ci-dessus, pour poser un isolateur de section sur une ligne aérienne de traction électrique de chemin de fer, du type dans lequel les moyens de liaison prévus aux extrémités de l'isolateur sont adaptés pour coopérer avec des moyens de liaison complémentaires solidaires de deux paires de griffes entre lesquelles est serré le conducteur d'alimentation, caractérisé en ce qu'il comprend un corps de forme allongée, comportant des moyens de retenue réglables dans le sens longitudinal dudit corps et adaptés pour coopérer avec lesdites griffes, et des moyens pour suspendre l'appareil sur le conducteur portant les griffes.

D'autres caractéristiques et avantages de l'invention apparaitront au cours de la description qui va suivre faite en se référant aux dessins annexés donnés uniquement à titre d'exemple et dans lesquels :

- la Fig. 1 est une vue en élévation latérale et en coupe partielle d'un isolateur de sections suivant l'invention pour ligne aérienne de traction électrique de chemin de fer;

- la Fig. 2 est une vue en plan de dessus;

4

- la Fig. 3 est une vue en coupe suivant la ligne 3-3 de la Fig. 1;

- la Fig. 4 est une vue partielle à plus grande échelle montrant les moyens de liaison d'une extrémité de l'isolateur engagés en prise avec les moyens de liaison complémentaires portés par les griffes serrant entre elles le conducteur d'alimentation;

- la Fig. 5 est une vue en coupe suivant la ligne 5-5 de la Fig. 4;

- la Fig. 6 est une vue en coupe suivant la ligne 6-6 de la Fig. 4;

- la Fig. 7 est une vue schématique en coupe partielle d'un mode de réalisation d'un appareil de pose d'isolateur suivant l'invention;

- les Fig. 8, 9, 10 sont des vues schématiques illustrant différentes phases de la mise en oeuvre du procédé suivant l'invention pour poser un isolateur de sections sur une ligne aérienne de traction électrique au moyen de l'appareil représenté à la Fig. 7.

L'isolateur suivant l'invention désigné dans son ensemble par la référence 1 comprend essentiellement deux éléments de monture 2 en alliage léger qui sont reliés entre eux au moyen de deux barres isolantes 3, 4 en un matériau isolant constitué de fibres de verre et de résine époxyde, revêtues d'un revêtement approprié destiné à empêcher la formation d'arcs.

Les barres isolantes 3 et 4 sont disposées parallèles avec leur extrémité engagées dans des logements 5 prévus dans les éléments de monture 2 et dans lesquels ces extrémités sont ancrées par collage, par exemple à l'araldite et/ou tous autres moyens appropriés connus par exemple mécaniques.

Chaque élément de monture 2 comporte un prolongement longitudinal 6 s'étendant vers l'arrière par rapport aux barres 3, 4, renforcé par un gousset 7 et, sur celui-

5

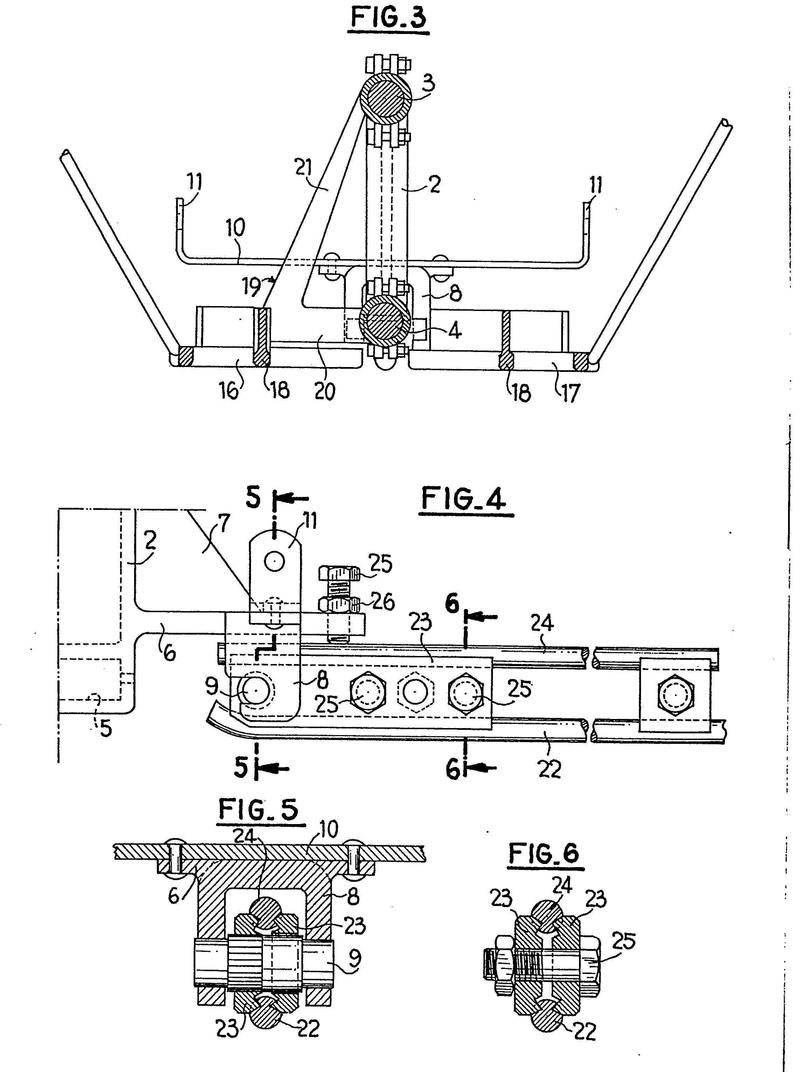

ci, un étrier formé d'une chape 8 dont les branches s'étendent vers le bas et présentent chacune la forme d'un crochet ouvert vers les barres isolantes et adapté pour recevoir un axe 9 solidaire d'une paire de griffes ancrées sur un conducteur et un support plat 10 dont les extrémités 11 sont repliées vers le haut comme représenté à la Fig. 3 en sens opposé à la chape 8 et destiné à la suspension de l'isolateur.

Les éléments de monture 2 comportent également chacun des branches 12, 13 s'étendant latéralement, de longueurs inégales; dont les extrémités externes sont reliées entre elles et constituent des supports 14, 15 qui portent respectivement des patins 16, 17 qui sont de préférence réalisés en acier inoxydable. De façon connue, les patins 16 et 17 ont des longueurs inégales et s'étendent obliquement en s'écartant l'un de l'autre d'une extrémité de l'isolateur vers le milieu de celui-ci. D'une façon également connue, les extrémités internes des patins 16 et 17 sont repliées vers le haut en s'éloignant l'une de l'autre de façon à former des cornes afin d'assurer un soufflage des arcs. Ces cornes sont également inclinées par rapport à la verticale afin d'éviter qu'un arc attaque l'isolateur du porteur de la caténaire.

Les patins 16, 17 sont disposés alternés sur les extrémités opposées de l'isolateur de façon à constituer un ensemble dans lequel ils sont symétriques et alternés, les patins 17 les plus longs s'étendant en sens opposé sur des côtés différents de l'isolateur tandis que les patins les plus courts 16 s'étendent de façon analogue sur les côtés respectifs opposés, aux extrémités de l'isolateur.

Cette configuration est dans son ensemble connue, la longueur des patins 17 étant telle que le pantographe d'une motrice circulant dans un sens ou dans l'autre attaque un patin 17 avant de quitter le patin 17 symétrique avec lequel il est en contact, les surfaces inférieures des patins s'étendant bien entendu au même niveau que les conducteurs d'alimentation de part et d'autre de l'isolateur.

L'isolateur comporte en outre comme connu en soi des frotteurs 18 en une matière isolante qui peut être par exemple une résine synthétique chargée de fibres de verre et qui s'étendent également dans le plan défini par les surfaces inférieures des patins 16, 17 et du conducteur d'alimentation.

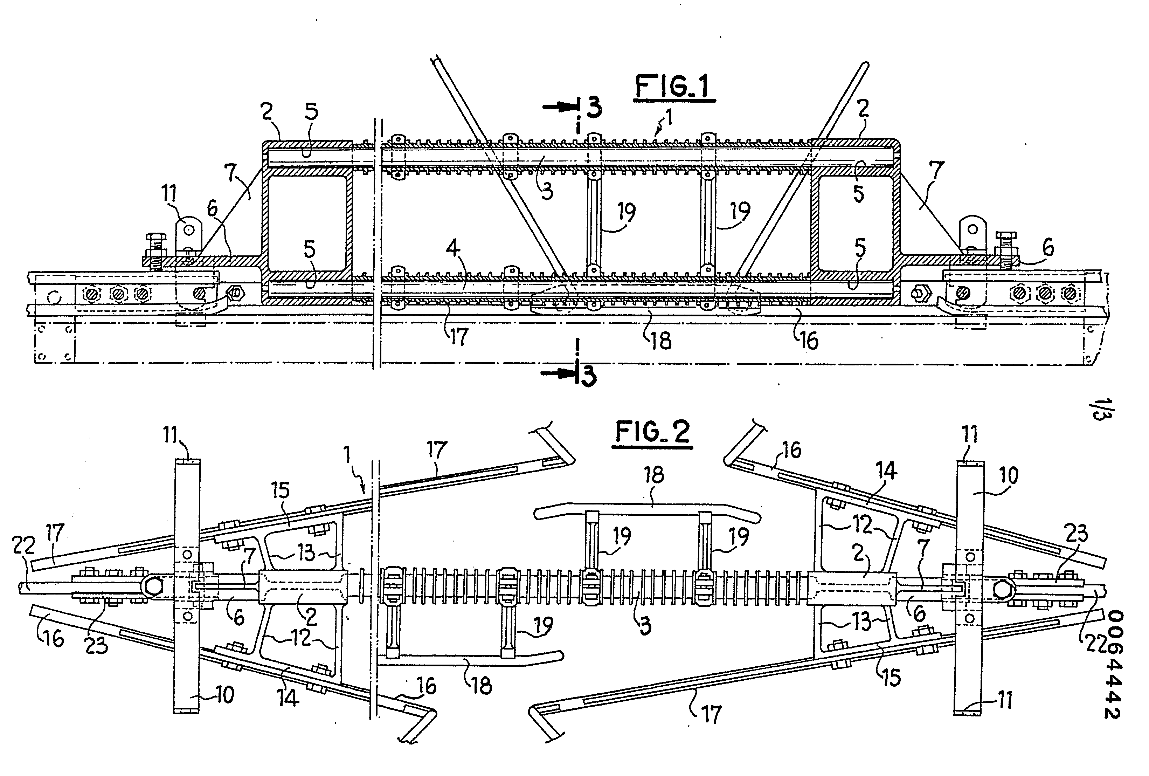

Suivant l'invention, ces frotteurs 18 sont disposés de façon à s'étendre, chacun sur un côté de la barre isolante inférieure 3 parallèlement et à une distance de celle-ci suffisante pour assurer un soutien stable au droit de l'intervalle existant entre les patins 16 et 17 d'un même côté, sur une longueur un peu supérieure à cet intervalle. D'une façon avantageuse les extrémités opposées de chaque frotteur 18 sont légèrement repliées comme représenté à la Fig. 2 pour s'étendre à peu près parallèlement aux patins respectifs 16 et 17 sur une courte distance.

Les frotteurs 18 sont fixés aux barres isolantes 3 et 4 au moyen de supports en L. Les frotteurs 18 sont fixés à l'intersection des branches horizontales 20 et verticales 21 de chaque support 19, dont les extrémités sont reliées aux barres isolantes 4 et 3 respectivement (Fig. 3). Deux supports 19 espacés sont prévus pour chaque frotteur 18. En outre, les frotteurs 18 de part et d'autre de l'isolateur s'étendent l'un en face de l'autre sur une courte distance.

On comprend que grâce à cet agencement, un pantographe d'une motrice circulant dans un sens ou dans l'autre attaque un frotteur 18 avant de quitter le patin court 16 du même côté et attaque ensuite le frotteur 18 du côté opposé avant d'attaquer le patin court 16

7

qui lui fait suite, et s'applique ainsi toujours sur deux organes espacés de part et d'autre de l'axe de l'isolateur, ce qui assure la stabilité de celui-ci sur toute la longueur de son trajet, avec la continuité électrique.

L'agencement des frotteurs suivant l'invention permet d'éviter le déséquilibre qui se produisait dans les isolateurs de sections connus jusqu'à présent lorsque le pantographe franchissait l'intervalle entre deux patins d'un même côté de l'isolateur, déséquilibre qui aux vitesses élevées recherchées actuellement pouvait provoquer la destruction de l'isolateur, compte-tenu de la pression d'environ 15 kg exercée par le pantographe et de la vitesse de déplacement de ce dernier.

L'isolateur décrit ci-dessus est relié aux extrémités du conducteur d'alimentation par des organes de liaison coopérant avec des moyens complémentaires prévus sur les griffes d'ancrage sur le conducteur d'alimentation. Les Fig. 4 à 6 illustrent ce montage.

Le conducteur 22 d'alimentation est serré entre deux bords longitudinaux de deux griffes de serrage 23 disposées face à face, un organe raidisseur rigide 24 étant disposé entre les bords opposés des griffes 23. Les griffes 23 sont serrées sur le conducteur 22 et le raidisseur 24 au moyen de plusieurs boulons 25, de façon connue.

A l'extrémité des griffes dirigées vers l'isolateur, ou extrémité interne, est disposé l'axe 9 emmanché à force dans des trous complémentaires des griffes 23 et dont les extrémités font saillie de part et d'autre de celles-ci.

L'ensemble formé par l'extrémité du conducteur 22 et celle de l'organe raidisseur 24 serrées entre les griffes 23 est disposé entre les branches de la chape 8 qui présentent une forme en crochet ouvert vers l'inté-

8

rieur de l'isolateur, de façon que les extrémités latérales de l'axe 9 s'étendent dans les crochets ainsi formés.

En outre le prolongement 6 de l'élément de monture 2 s'étend légèrement en arrière de la chape 8 et comporte un trou taraudé dans lequel est disposée une vis de réglage 25 comportant un contre-écrou 26, l'extrémité de la vis 25 prenant appui sur la partie supérieure de l'organe raidisseur 24 de façon connue.

Cette vis 25 permet de régler exactement l'assiette de l'isolateur pour amener les surfaces inférieures des patins et des frotteurs dans un plan contenant le conducteur d'alimentation.

L'appareil suivant l'invention pour poser l'isolateur de sections sur une ligne aérienne de traction électrique est représenté à la Fig. 7. Cet appareil comprend un corps de forme allongée formé de deux longerons 30 parallèles et espacés au moyen d'entretoises (non visibles au dessin), les longerons 30 comportant chacun à une extrémité une butée constituée par une plaque 31 fixée perpendiculairement, ces deux plaques 31 s'étendant parallèlement dans le même sens. Chacune de ces plaques comporte un trou 32 dans lequel peut être disposé librement un axe 33 amovible. Le corps de l'appareil comporte au voisinage de son extrémité opposée un dispositif de réglage à vis de type connu comprenant une vis 34 montée rotative dans deux entretoises 35 solidaires des longerons et sur laquelle est disposé un manchon fileté 36 dont au moins une extrémité 37 présente une forme et une largeur appropriées pour être immobilisée en rotation entre les longerons 30 tout en pouvant coulisser par rapport à eux.

Le manchon 36 porte une butée verticale 38 de même forme et de même dimension que la butée 31 et s'étendant dans le même sens. On comprend que l'on peut déplacer la butée 38 longitudinalement par rapport au corps en la rapprochant ou en l'éloignant de la butée 31 en faisant tourner la vis 34 au moyen de sa tête 39.

La butée mobile 38 comporte, comme la butée fixe 31, un trou 32 dans lequel est disposé librement un axe amovible 33.

D'une façon avantageuse des cales amovibles 41 sont disposées transversalement aux longerons 30 au voisinage des butées 31 et 38, ces cales comportant une rainure médiane dans un but qui sera expliqué dans la suite.

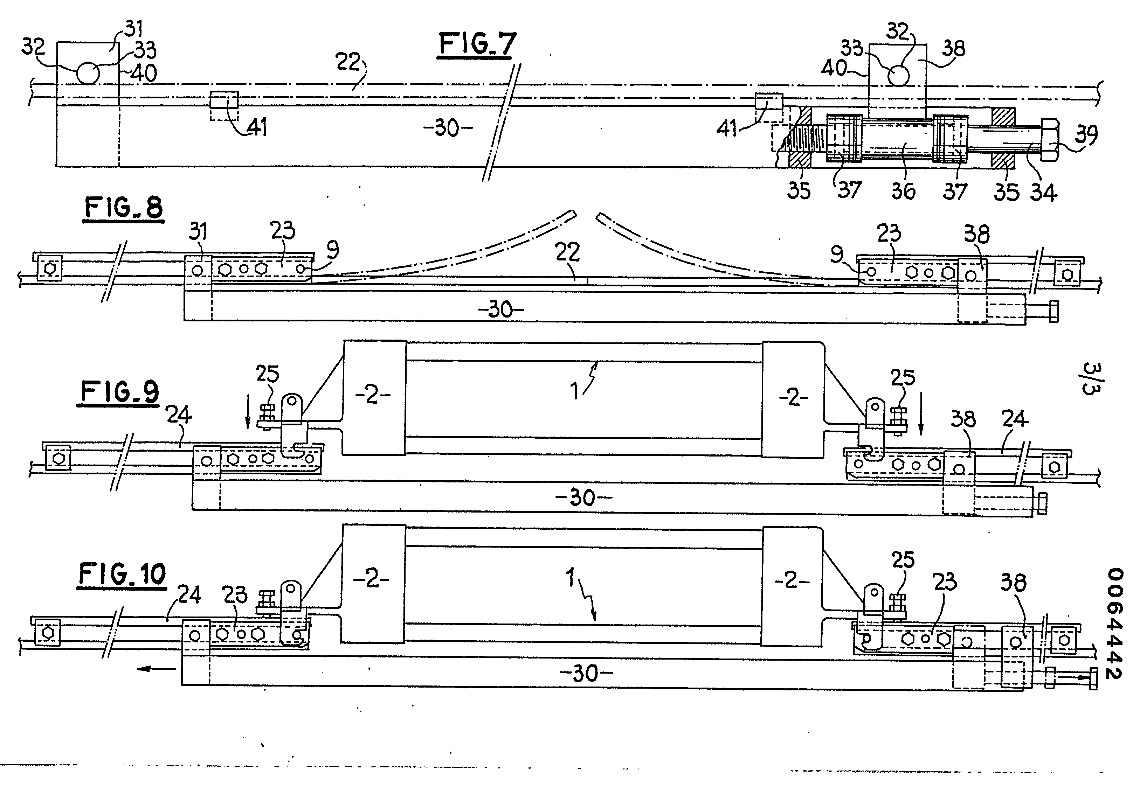

Pour poser un isolateur de sections du type décrit plus haut au moyen de l'appareil suivant l'invention, on pose tout d'abord les griffes 23 avec les organes raidisseurs 24 sur le conducteur d'alimentation 22, comme représenté à la Fig. 6, en les espaçant sur la longueur du conducteur de manière que la distance entre les axes 9 soit à peu près égale à la distance entre les crochets des chapes 8.

On présente l'appareil représenté à la Fig. 7 au-dessous du conducteur d'alimentation avec ses butées 31, 38 dirigées vers le haut et s'étendant chacune de part et d'autre du conducteur 23, et on règle la position de la butée mobile 38 de façon que ses bords internes 40 et les bords internes 40 de la butée fixe puissent être amenés en arrière des extrémités correspondantes des paires de griffes 23, comme représenté à la Fig. 8.

On rapproche ensuite la butée 38 de la butée 31 au moyen du dispositif à vis 34, à force, de façon que la tension du conducteur qui est habituellement de l'ordre de 1 000 à 1 200 kg soit entièrement assumée par les butées.

On introduit les axes 33 dans les trous des butées 31, 38 prévus à cet effet, de manière que le conducteur 22 soit prisonnier entre ces axes et les cales 41,

10

assurant ainsi la suspension de l'appareil sur le câble.

On coupe alors le conducteur, tout d'abord au milieu puis ensuite au ras des extrémités internes des griffes 23.

On présente alors l'isolateur comme représenté à la Fig. 9 de manière que les extrémités des crochets de ses chapes 8 se trouvent disposés en arrière des axes 9 portés par les griffes et on abaisse l'isolateur en position prêt à être accroché sur ces axes.

On éloigne alors progressivement la butée 38 de la butée 31 en agissant sur la vis 34 et la tension du câble amène alors les axes 9 dans les logements des crochets des chapes 8, l'isolateur se trouvant ainsi posé comme représenté à la Fig. 10.

On comprend que les axes 33 des butées sont disposés entre le conducteur d'alimentation 22 et l'organe raidisseur 34, entre les extrémités arrière des griffes 23 et des entretoises 42 qui maintiennent cet organe de façon connue.

On comprend que l'appareil suivant l'invention permet de poser l'isolateur sur le conducteur de façon extrêmement simple, en toute sécurité sur une ligne de traction sans détendre ni couper celle-ci au préalable, ce qui constitue un avantage considérable par rapport aux procédés utilisés jusqu'à présent.

Entre autres avantages procurés par l'isolateur suivant l'invention, on notera un gain de poids important, la possibilité de circulation dans les deux sens sans aucune différence et la rigidité qui s'est révélée telle aux essais que l'isolateur est pratiquement indéformable sous la tension d'une ligne aérienne d'une section de 107 mm$^2$, ce qui permet d'effectuer en usine un réglage définitif des frotteurs et des patins.

L'appareil de pose suivant l'invention permet également de supprimer les mains de tirage et les appa-

11

reils tendeurs qui sont habituellemnt utilisés pour cette opération, celle-ci étant ainsi effectuée dans un temps beaucoup plus court.

En outre, le seul réglage nécessaire de l'isolateur est effectué très simplement en agissant uniquement sur les vis d'extrémité 26.

- 12 -

- <u>REVENDICATIONS</u> -

1. Isolateur de sections pour ligne aérienne de traction électrique de chemin de fer, du type comportant deux montures métalliques (2) en alliage léger reliées respectivement au conducteur de contact (22) de deux sections voisines et reliées mécaniquement entre elles par des barres (3,4) en matériau isolant disposées parallèlement dans un plan vertical contenant le conducteur et dont les extrémités sont encastrées dans des logements prévus dans les parties en regard desdites montures (2), des patins symétriques et décalés (16,17) pour assurer la continuité électrique, et deux frotteurs isolants symétriques, caractérisé en ce que lesdits frotteurs (18) sont décalés longitudinalement et disposés en regard des intervalles entre les patins (16,17) respectivement, l'agencement étant tel qu'un appui continu soit assuré au pantographe en des points espacés de part et d'autre de l'axe du conducteur sur la totalité de son trajet le long de l'isolateur.

2. Isolateur suivant la revendication 1, caractérisé en ce que le rapport entre l'écartement desdites barres (3,4) et leur longueur est compris entre 1/3,5 et 1/4,2.

3. Procédé pour poser un isolateur de sections tel que défini suivant l'une quelconque des revendications 1 et 2 sur une ligne aérienne de traction électrique de chemin de fer, cet isolateur étant du type comportant à chaque extrémité des moyens de liaison (8) adaptés pour coopérer avec des moyens de liaison complémentaires (9) solidaires de griffes de fixation (23) ancrées sur le conducteur d'alimentation (22), caractérisé en ce qu'on pose tout d'abord lesdites griffes (23) sur le conducteur avec leurs moyens de liaison (9) espacés l'un de l'autre d'une distance légèrement inférieure à la distance séparant les moyens de liaison (8) de l'isolateur, on maintient par des moyens réglables mécaniquement lesdites griffes (23) l'une par rapport à l'autre de façon à les empêcher de s'écarter, on sectionne ledit conducteur au niveau des extrémités en regard desdites griffes, on présente l'isolateur de façon que les moyens de liaison (9) desdites griffes soient disposés entre les moyens de liaison (8) des extrémités de l'isolateur et en regard de ceux-ci, et on libère lesdites griffes (23) en les laissant s'écarter l'une de l'autre progressivement et pour amener les moyens de liaison (9) des griffes en prise avec ceux (8) des extrémités de l'isolateur.

4. Appareil pour la mise en oeuvre du procédé tel que défini ci-dessus, pour poser un isolateur de sections sur une ligne aérienne de traction électrique de chemin de fer, du type dans lequel les moyens de liaison (8) prévus aux extrémités de l'isolateur sont adaptés pour coopérer avec des moyens de liaison complémentaires (9) solidaires de deux paires de griffes (23) entre lesquelles est serré le conducteur d'alimentation (22), caractérisé en ce qu'il comprend un corps de forme allongée comportant des moyens de retenue (31,38) réglables dans le sens longitudinal dudit corps et adaptés pour coopérer avec lesdites griffes (23), et des moyens (32,33) pour suspendre l'appareil sur le conducteur portant les griffes.

5. Appareil suivant la revendication 4, caractérisé en ce que lesdits moyens de retenue réglables sont des butées (31,38) dont l'une au moins est mobile.

6. Appareil suivant la revendication 5, caractérisé en ce que ladite butée mobile (38) est

- 14 -

fixée sur un écrou (36,37) immobilisé en rotation sur une vis (34) disposée longitudinalement et rotative entre deux longerons (30) qui portent à leurs extrémités opposées une butée fixe (31).

7. Appareil suivant l'une quelconque des revendications 4 à 6, caractérisé en ce qu'il comporte des moyens (32,33) de suspension de l'appareil sur un conducteur.

## FIG.3

## FIG.4

## FIG.5

## FIG.6

FIG.7 FIG.8 FIG.9 FIG.10

3/3

0064442

**RAPPORT DE RECHERCHE EUROPEENNE**

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y,D | US - A - 4 187 934 (SENFTEN)<br><br>* colonne 3, lignes 1-4; colonne 4, lignes 8-19; figures 2,7,16 * | 1 | B 60 M 1/18 |
| Y,D | CH - A - 594 518 (FLURY)<br><br>* colonne 1, lignes 6-23;35-37; figures 1,2 * | 1-3 | |
| A,D | FR - A - 835 867 (SCHABELITZ)<br><br>* page 1, lignes 31-44; figures 1,2 * | 1,2 | |
| A | DE - A - 2 321 380 (LICENTIA)<br><br>* page 5, alinéas 5,6; figures 1,3,4 * | 1,3 | **DOMAINES TECHNIQUES RECHERCHES (Int. Cl. ³)**<br><br>B 60 M 4/00 |

Le present rapport de recherche a ete etabli pour toutes les revendications

| Lieu de la recherche | Date d'achevement de la recherche | Examinateur |
|---|---|---|
| LA HAYE | 19-07-1982 | TIELEMANS |

CATEGORIE DES DOCUMENTS CITES

X : particulierement pertinent à lui seul
Y : particulierement pertinent en combinaison avec un autre document de la meme categorie
A : arriere-plan technologique
O : divulgation non-ecrite
P : document intercalaire

T : theorie ou principe à la base de l'invention
E : document de brevet anterieur, mais publié à la date de depôt ou apres cette date
D : cite dans la demande
L : cite pour d'autres raisons

& : membre de la meme famille, document correspondant